# EUROPEAN PATENT APPLICATION

(11) **EP 2 560 044 A1**
(43) Date of publication of application: **20.02.2013**
(21) Application number: 11768650.1
(22) Date of filing: 25.01.2011
(51) Int. Cl.: G02F 1/1343, G09F 9/30

(54) **METHOD FOR MANUFACTURING ELECTRONIC SUBSTRATE, METHOD FOR MANUFACTURING LIQUID CRYSTAL DISPLAY DEVICE, ELECTRONIC SUBSTRATE, AND LIQUID CRYSTAL DISPLAY DEVICE**

(30) Priority: 16.04.2010 JP 2010095100
(71) Applicant: Sharp Kabushiki Kaisha, Osaka-shi, Osaka 545-8522 (JP)
(72) Inventor: MIWA, Masahiko, Osaka-shi Osaka 545-8522 (JP); FUJIWARA, Masahiro, Osaka-shi Osaka 545-8522 (JP)
(74) Representative: Müller - Hoffmann & Partner
(86) International application number: PCT/JP2011/051339
(87) International publication number: WO 2011/129128

(57) **Abstract**

The present invention provides a method for producing an electronic substrate that is provided with highly reliable electronic elements and lines. The method of the present invention provides an electronic substrate which includes a main substrate, a first conductive layer, a first insulating layer, a second conductive layer, a second insulating layer, and a third conductive layer, laminated in the order set forth, and in which the first conductive layer, the second conductive layer, and the third conductive layer are connected together at an opening that penetrates the first insulating layer and the second insulating layer. The manufacturing method includes the steps of: forming the first conductive layer; forming the first insulating layer with an opening which exposes at least a part of the first conductive layer; applying a conductive film to an exposed portion of the first conductive layer and on the first insulating layer; forming the second conductive layer that covers a surface of the exposed portion of the first conductive layer by applying a resist to a part of the conductive film and etching the conductive film that does not overlap the resist; forming the second insulating layer with an opening which exposes at least a part of the second conductive layer; and forming the third conductive layer on an exposed portion of the second conductive layer and on the second insulating layer.

## Description

### TECHNICAL FIELD

The present invention relates to a method for manufacturing an electronic substrate, a method for manufacturing a liquid crystal display device, an electronic substrate, and a liquid crystal display device. The present invention specifically relates to a method for manufacturing an electronic substrate that is suitably used for a liquid crystal display device and a method for manufacturing a liquid crystal display device, and an electronic substrate that is suitably used for a liquid crystal display device and a liquid crystal display device.

### BACKGROUND ART

Liquid crystal display devices are small, thin, less power-consuming, and light-weight devices, and thus they are used in various electronic devices. In particular, active-matrix liquid crystal display devices, in which each pixel has a switching element, are used in a wide variety of devices such as OA devices (e.g. personal computers), AV devices (e.g. televisions), and portable devices (e.g. mobile phones).

An active-matrix liquid crystal display device includes a pair of transparent substrates and a liquid crystal layer sandwiched therebetween. On one of the transparent substrates are disposed multiple gate lines and multiple data lines horizontally and vertically, and pixel electrodes are provided on the respective regions partitioned by these lines. Each TFT has a gate terminal, a source terminal, and a drain terminal, and the gate terminal, the drain terminal, and the source terminal are connected to a gate line, a data line, and a pixel electrode, respectively. When an ON signal for switching and an image data signal are supplied to the gate lines and the source lines, respectively, the source terminal and the drain terminal are electrically connected and the image data signal is supplied to the pixel electrode (for example, see Patent Literature 1).

### CITATION LIST

### - Patent Literature

Patent Literature 1: JP 2007-248892 A

### SUMMARY OF INVENTION

### - Technical Problem

The present inventors have considered a recent strong demand for improvement of the pixel aperture ratio of liquid crystal display devices, and have focused on, as a method for improving the pixel aperture ratio, a method of forming a CS electrode layer (storage capacitor electrode) for maintaining a pixel electrode capacitance from a translucent material.

As the result of studies, however, the present inventors have found that, in a process of applying a transparent conductive film such as ITO (indium tin oxide) or IZO (indium zinc oxide) to the entire surface and then performing etching with a hydrochloric or oxalic etchant to form a CS electrode layer, components such as electrodes of the TFT disposed on the layer under the transparent conductive film may be damaged by the etching in some cases. Corrosion of the electrodes of the TFT makes it impossible to electrically connect the pixel electrode and the TFT, resulting in pixel defects.

The present invention is devised in view of the above problems, and it aims to provide a method for producing an electronic substrate that is provided with highly reliable electronic elements and lines.

### - Solution to Problem

The present inventors have performed various studies on a method of patterning lines, electrodes, and the like of an electronic substrate without damages on the electronic elements, such as a TFT, and the lines, and thereby focused on resist arrangement. Then, they have found that, even in the case that a transparent conductive film is formed on a conductive film that serves as an electrode or a line, a resist is conventionally applied only to the transparent conductive film that is used as a line or an electrode, and thereby the line or electrode formed under the transparent conductive film that is to be removed by etching is corroded. They have further found that, with respect to the conductive film on the electrode or line, damages on the conductive film that serves as an electrode or a line can be prevented by leaving the resist on the conductive film purposely so that the conductive film remains. As a result, the present inventors have arrived at the solution to the above problems and completed the present invention.

In other words, the present invention relates to a method for manufacturing an electronic substrate which comprises a main substrate, a first conductive layer, a first insulating layer, a second conductive layer, a second insulating layer, and a third conductive layer, laminated in the order set forth, and in which the first conductive layer, the second conductive layer, and the third conductive layer are connected together at an opening that penetrates the first insulating layer and the second insulating layer, the method comprising the steps of: forming the first conductive layer; forming the first insulating layer with an opening which exposes at least a part of the first conductive layer; applying a conductive film to an exposed portion of the first conductive layer and the first insulating layer; forming the second conductive layer that covers a surface of the exposed portion of the first conductive layer by applying a resist to a part of the conductive film and etching the conductive film that does not overlap the resist; forming the second insulating layer with an opening which exposes at least a part of the second conductive layer; and forming the third conductive layer on an exposed portion of the second conductive layer and the second insulating layer.

The electronic substrate produced by the manufacturing method of the present invention comprises a main substrate, a first conductive layer, a first insulating layer, a second conductive layer, a second insulating layer, and a third conductive layer, laminated in the order set forth. In the electronic substrate, the first conductive layer, the second conductive layer, and the third conductive layer are connected together at an opening that penetrates the first insulating layer and the second insulating layer. The main substrate is a substrate on which lines and electronic elements such as transistors, resistors, capacitors, and diodes may be placed. The material thereof is not particularly limited, and may be glass, plastic, or the like. In the electronic substrate, the first conductive layer, the second conductive layer, and the third conductive layer are connected; this may be expressed as "electrically integrated". The first conductive layer, the second conductive layer, and the third conductive layer each may have translucency or may have a light-shielding property.

The manufacturing method comprises the steps of forming a first conductive layer and forming a first insulating layer with an opening which exposes at least a part of the first conductive layer. The opening is a hole (contact hole) for connecting the first conductive layer, the second conductive layer, and the third conductive layer. The opening may be formed by photolithography, for example.

The manufacturing method comprises the steps of applying a conductive film to an exposed portion of the first conductive layer and the first insulating layer, and forming a second conductive layer that covers a surface of the exposed portion of the first conductive layer by applying a resist to a part of the conductive film and etching the conductive film that does not overlap the resist. In this step, the conductive film that does not overlap the resist is shaved by etching so that electrodes or lines are patterned into a predetermined shape. Thereby, the first conductive layer under the conductive film that is placed under the resist is not affected by etching. As a result, the present step enables to efficiently pattern the second conductive layer into a predetermined shape without damages on the first conductive layer. Since the conductive film under the resist is not removed, part of the conductive film remains as a remaining-film layer on the first conductive layer. Such a remaining-film layer herein is also referred to as the second conductive layer.

The manufacturing method comprises the steps of forming a second insulating layer with an opening which exposes at least a part of the second conductive layer, and forming a third conductive layer on an exposed portion of the second conductive layer and the second insulating layer. Thereby, the first conductive layer and the third conductive layer are connected via the second conductive layer. Further, the first conductive layer is not damaged by etching, and thus highly reliable electronic elements and lines can be obtained.

The method for manufacturing an electronic substrate of the present invention is formed by such essential steps, and may or may not include other steps. Preferable examples of the method for manufacturing an electronic substrate of the present invention are mentioned in detail below.

Preferably, the step of forming the second conductive layer is also a step of forming a fourth conductive layer that is electrically separated from the second conductive layer by applying a resist to another part of the conductive film and etching the conductive film that does not overlap the resist. Such a method enables to perform the step for protecting the first conductive layer simultaneously with the step for forming other conductive components, so that the manufacturing steps are made more efficient. The second conductive layer is a component for connecting the first conductive layer and the third conductive layer, and thus it is difficult to have a special use. In contrast, the fourth conductive layer can be used as various lines or electrodes.

Preferably, the third conductive layer and the fourth conductive layer form a capacitance at the second insulating film. The fourth conductive layer may be disposed between the first insulating layer and the second insulating layer to form a capacitance together with the third conductive layer, if necessary, and it may be used as a capacitor, for example.

The present invention also relates to a method for manufacturing a liquid crystal display device, the method comprising: manufacturing a liquid crystal display device that comprises a pair of substrates and a liquid crystal layer sandwiched between the substrates, one of the substrates being manufactured by the above manufacturing method, the first insulating layer being an organic insulating layer, the second insulating layer being an inorganic insulating layer, and the second conductive layer and the third conductive layer each having translucency. In the case of forming a fourth conductive layer, the fourth conductive layer has translucency. Use of a transparent conductive material as lines and electrodes leads to an improved aperture ratio in comparison with the case that the components are formed from a material having a light-shielding property. Formation of the insulating layers from different materials, that is, from an inorganic material and an organic material, leads to the following effects. The first insulating layer is preferably 1 µm or greater in thickness for the purposes of leveling and of weakening the field effect of the electrodes and lines of the lower layer, and an organic insulating film such as resin is suitable. In order to form a capacitance between the third conductive layer and the fourth conductive layer, an inorganic insulating film with a low leak current is suitable for the second insulating layer. Utility forms of the respective conductive layers include a form that the first conductive layer is used as a drain electrode of a thin-film transistor, the third conductive layer is used as a pixel electrode, and the fourth conductive layer is used as a storage capacitor electrode.

The method for manufacturing a liquid crystal display device of the present invention is formed by such essential steps, and may or may not include other steps.

The method for manufacturing a liquid crystal display device of the present invention can produce a liquid crystal display device provided with highly reliable electronic elements and lines while having a high aperture ratio. Since etchants to be used are different in many cases between conductive materials with translucency and conductive materials without translucency, the present invention is particularly suitable in the case of using different conductive materials in combination. In other words, the material of the first conductive layer and the material of the second conductive layer are preferably different materials, and the material of the first conductive layer and the material of the third conductive layer are preferably different materials.

The present invention also relates to an electronic substrate, comprising, laminated in the order set forth: a main substrate; a first conductive layer; a first insulating film; a second conductive layer; a second insulating film; and a third conductive layer, the first insulating layer being provided with a first opening which exposes at least a part of the first conductive layer, the second insulating layer being provided with a second opening which exposes at least a part of the second conductive layer, the first conductive layer, the second conductive layer, and the third conductive layer being connected together at the first opening and the second opening, the second conductive layer covering a surface of an exposed portion of the first conductive layer, and the third conductive layer covering a surface of an exposed portion of the second conductive layer.

The electronic substrate of the present invention is provided with a first opening that penetrates the first insulating layer and a second opening that penetrates the second insulating layer, and these openings serve as holes (contact holes) formed for connecting the first conductive layer, the second conductive layer, and the third conductive layer. The second conductive layer covers the surface of the exposed portion of the first conductive layer and the third conductive layer covers the surface of the exposed portion of the second conductive layer. Thus, they are electrically integrated and are in direct contact with each other.

The electronic substrate of the present invention essentially includes such components, and may or may not include other components. Preferable embodiments of the electronic substrate of the present invention are mentioned in detail below.

Preferably, the electronic substrate further comprises a fourth conductive layer which is on the same layer as the second conductive layer and which is electrically separated from the second conductive layer. Thereby, the fourth conductive layer as another conductive component can be formed simultaneously in forming the second conductive layer, and thus the manufacturing step can be simplified. The second conductive layer is a component for connecting the first conductive layer and the third conductive layer, and thus it is difficult to have a special use. In contrast, the fourth conductive layer can be used for various lines and electrodes.

Preferably, the third conductive layer and the fourth conductive layer form a capacitance at the second insulating film. The fourth conductive layer may be sandwiched between the first insulating layer and the second insulating layer to form a capacitance together with the third conductive layer, if necessary, and it may be used as a capacitor, for example.

The present invention also relates to a liquid crystal display device, comprising: a pair of substrates consisting of the electronic substrate according to claim 6 and an opposite substrate; and a liquid crystal layer sandwiched between the substrates, the first insulating layer being an organic insulating layer, the second insulating layer being an inorganic insulating layer, and the second conductive layer and the third conductive layer each having translucency. In the case of forming a fourth conductive layer, the fourth conductive layer has translucency. Use of a transparent conductive material as lines and electrodes leads to an improved aperture ratio in comparison with the case that the components are formed from a material having a light-shielding property. Formation of the insulating layers from different materials, that is, from an inorganic material and an organic material, leads to the following effects. The first insulating layer is preferably 1 µm or greater in thickness for the purposes of leveling and of weakening the field effect of the electrodes and lines of the lower layer, and an organic insulating film such as resin is suitable. In order to form a capacitance between the third conductive layer and the fourth conductive layer, an inorganic insulating film with a low leak current is suitable for the second insulating layer. Utility forms of the respective conductive layers include a form that the first conductive layer is used as a drain electrode of a thin-film transistor, the third conductive layer is used as a pixel electrode, and the fourth conductive layer is used as a storage capacitor electrode.

The liquid crystal display device of the present invention essentially includes such components, and may or may not include other components.

The liquid crystal display device of the present invention enables to obtain a liquid crystal display device provided with highly reliable electronic elements and lines while having a high aperture ratio. The material of the first conductive layer and the material of the second conductive layer are preferably different materials, and the material of the first conductive layer and the material of the third conductive layer are preferably different materials.

### - Advantageous Effects of Invention

The method for manufacturing an electronic substrate of the present invention can effectively prevent corrosion of electrodes or lines under a conductive film in the manufacturing steps even though the method includes the step of forming a conductive film on the electrodes or lines of the electronic elements and patterning a part of the conductive film. Thus, a highly reliable electronic substrate can be produced.

### BRIEF DESCRIPTION OF DRAWINGS

[Fig. 1]

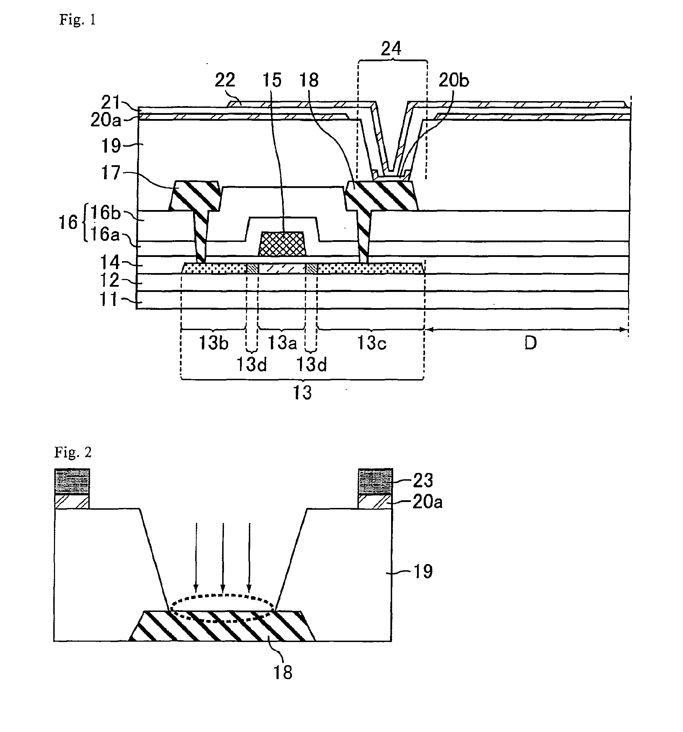

   Fig. 1 is a schematic cross-sectional view of a TFT substrate of Embodiment 1.
[Fig. 2]
   Fig. 2 is a schematic view showing the etching step without a resist on ITO on a drain electrode.
[Fig. 3]

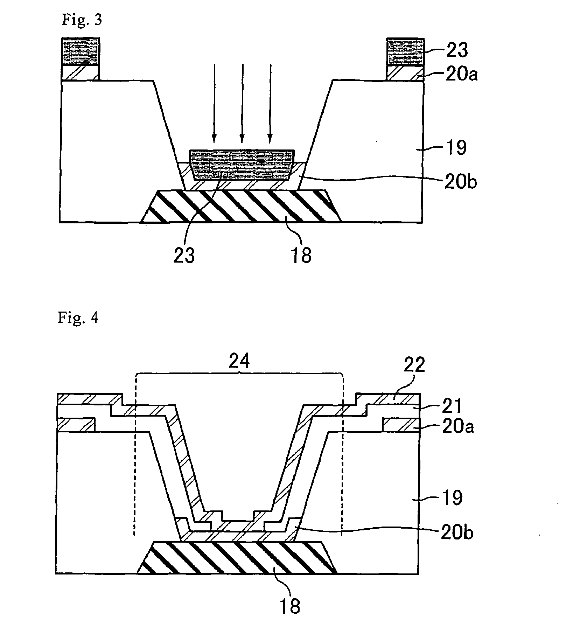

   Fig. 3 is a schematic view showing the etching step with a resist on ITO on a drain electrode.
[Fig. 4]
   Fig. 4 is an enlarged schematic cross-sectional view especially showing a region above a drain electrode of a TFT substrate produced by the manufacturing method of Embodiment 1.
[Fig. 5]

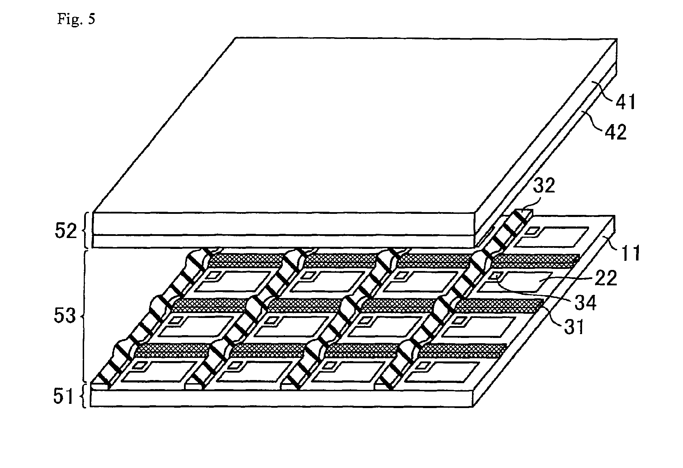

   Fig. 5 is a schematic perspective view of a liquid crystal display device to which the TFT substrate of Embodiment 1 is applied.

### DESCRIPTION OF EMBODIMENTS

The present invention will be mentioned in more detail referring to the drawings in the following embodiment, but is not limited to these embodiments.

### Embodiment 1

A TFT substrate (electronic substrate) of Embodiment 1 can be used as a substrate of a liquid crystal display device for displays of devices such as mobile phones, PDAs, and game consoles.

Fig. 1 is a schematic cross-sectional view of a TFT substrate of Embodiment 1. As shown in Fig. 1, the TFT substrate has a base coat layer 12 on a glass substrate (main substrate) 11, and has a TFT on the base coat layer 12. The TFT has a semiconductor layer 13, a gate electrode 15, a source electrode 17, and a drain electrode (first conductive layer) 18. A gate insulating film 14 is disposed between the semiconductor layer 13 and the gate electrode 15. Interlayer films 16 are disposed between the gate electrode 15 and the source electrode 17 and between the gate electrode 15 and the drain electrode 18.

The semiconductor layer 13 has a channel region 13a overlapping the gate electrode 15, a source region 13b connected to the source electrode 17, a drain region 13c connected to the drain electrode 18, and LDD (lightly doped drain, low impurity concentration) regions 13d between the source region 13b and the channel region and between the drain region 13c and the channel region 13a.

An organic insulating layer (first insulating layer) 19 is formed on the TFT, and a CS electrode layer (fourth electrode layer) 20a is disposed on the organic insulating layer 19. An inorganic insulating layer (second insulating layer) 21 is formed on the CS electrode layer 20a, and a pixel electrode (third conductive layer) 22 is disposed on the organic insulating layer 19. The CS electrode layer 20a can form a capacitance together with the pixel electrode 22, so that it serves to store an electric potential of the pixel electrode 22 in the liquid crystal display device.

The pixel electrode 22 is connected to the drain electrode 18 at an opening 24 that penetrates the organic insulating layer 19 and the inorganic insulating layer 21. A remaining-film layer (second transparent conductive layer) 20b, which is left upon forming the CS electrode layer 20a, is disposed between the drain electrode 18 and the pixel electrode 22 so as to cover the surface of the drain electrode 18.

In the case of using the TFT substrate of Embodiment 1 for a liquid crystal display device, the liquid crystal layer at a portion overlapping the TFT does not contribute to image display. The region on the right side of a dot line in Fig. 1 serves as a pixel opening D and contributes to image display.

The respective structures of the TFT substrate of Embodiment 1 will be described in more detail hereinbelow referring to a method for manufacturing the TFT substrate of Embodiment 1. The following description supposes the case that the TFT substrate of Embodiment 1 is used as a substrate constituting a liquid crystal display device.

First, a glass substrate 11 is prepared. The glass substrate 11 may be replaced by another material whose surface has an insulating property (e.g. plastic, silicon, or surface-insulated metal or stainless-steel), and it preferably has translucency.

Next, a base coat layer 12 with a thickness of 100 to 400 nm is formed. The base coat layer 12 may be formed from a silicon-containing insulating material (e.g. SiO₂, SiN, SiNO) by plasma CVD or sputtering. The base coat layer 12 prevents diffusion of impurities such as alkalimetal elements from the glass substrate 11 and reduces variation in the electric properties of the TFTs. The base coat layer 12 may have a multilayer structure.

Next, an island-like semiconductor layer 13 with a thickness of 30 to 100 nm is formed. The semiconductor layer 13 may be formed by forming a non-crystalline semiconductor (amorphous silicon) film by, for example, sputtering, LPCVD, or plasma CVD, then forming a crystalline semiconductor (polysilicon) film by crystallization treatment such as laser crystallization, thermal crystallization, or thermal crystallization using a catalyst such as nickel, and then patterning the film into an island-like shape by photolithography. The material of the semiconductor layer 13 is not particularly limited, and is preferably silicon (Si) or a silicon-germanium (SiGe) alloy.

Next, a gate insulating film 14 with a thickness of 30 to 100 nm is formed. The gate insulating film 14 may be formed from a silicon-containing insulating material (e.g. SiO₂, SiN, SiNO) by plasma CVD or sputtering. The gate insulating film 14 may have a multilayer structure. The material of the gate insulating film 14 is particularly preferably SiO₂. If the gate insulating film 14 has a multilayer structure, the layer in contact with the semiconductor layer 13 is preferably a SiO₂ layer. Further, the material of the semiconductor layer 13 in this case is preferably silicon (Si). Thereby, the energy level at the interface between the gate insulating film 14 and the semiconductor layer 13 is reduced, so that the electric properties of the TFT can be improved.

Next, the whole of the semiconductor layer 13 is doped with an impurity element such as boron (B) by ion implantation for the purpose of controlling the threshold voltage of the TFT. This ion implantation is performed under the conditions of 50 kV and about 5 × 10¹² to 3 × 10¹³ cm⁻². The concentration of the impurity element in the ion-doped semiconductor layer 13 is about 5 × 10¹⁶ to 5 × 10¹⁷ cm⁻³.

Next, a conductive film with a thickness of 200 to 600 nm is formed by sputtering, and then the conductive film is patterned into a predetermined shape by photolithography to form a gate electrode 15. Examples of a suitable material for the gate electrode 15 include high-melting-point metals such as tantalum (Ta), tungsten (W), titanium (Ti), and molybdenum (Mo), and alloys and compounds mainly containing these high-melting-point metals. Suitable among the compounds mainly containing the high-melting-point metals are nitrides. The gate electrode 15 may have a structure in which conductive films formed from these materials are laminated.

Next, the semiconductor layer 13 is doped with impurities such as nitrogen (N) by ion implantation in a self-alignment manner using the gate electrode 15 as a mask. The ion implantation in this case is performed under the conditions of 70 kV and about 1 × 10¹³ to 3 × 10¹³ cm⁻². The concentration of the impurity element in the semiconductor layer 13 after the ion implantation is about 1 × 10¹³ to 3 × 10¹³ cm⁻³. Thereby, the semiconductor layer 13 under the gate electrode serves as a channel region 13a.

Next, while the semiconductor layer 13 at a region to be an LDD region is masked by a resist, the semiconductor layer 13 is doped with impurities such as nitrogen (N) by ion implantation. The ion implantation in this case is performed under the conditions of 50 kV and about 5 × 10¹⁵ to 1 × 10¹⁶ cm⁻². The concentration of the impurity element in the ion-doped semiconductor layer 13 is about 1 × 10¹⁹ to 1 × 10²⁰ cm⁻³. The regions which are ion-doped in this step serve as a source region 13b and a drain region 13c (high-impurity-concentration regions), whereas the regions which are not ion-doped in this step serve as LDD regions 13d in the semiconductor layer 13.

Next, an interlayer film 16 with a thickness of 0.5 to 1.5 µm is formed. The interlayer film 16 consists of a first interlayer film 16a and a second interlayer film 16b which are made of different materials and are laminated. The first interlayer film 16a and the second interlayer film 16b each may be formed from a silicon-containing insulating material (e.g. SiO₂, SiN, SiNO) by plasma CVD or sputtering. Specifically, for example, the first interlayer film 16a is formed as a hydrogen-containing silicon nitride (SiN:H) layer with a thickness of 0.2 to 0.4 µm and the second interlayer film 16b is formed as a SiO₂ layer with a thickness of 0.4 to 0.6 µm. Thereby, the hydrogen in the silicon nitride layer 16a can be effectively used for hydrogenation and activation of the semiconductor layer 13. Examples of the conditions for the hydrogenation and activation include a method of heating at 400°C to 450°C for about 0.5 to 1.0 hour. The interlayer film 16 may have a monolayer structure.

Next, contact holes (openings) are formed by photolithography through the interlayer film 16 and the gate insulating film 14 above the source region 13b and the drain region 13c of the semiconductor layer. Thereby, the source region 13b and the drain region 13c of the semiconductor layer are partly exposed.

Next, a conductive film with a thickness of 400 to 1000 nm is formed by sputtering, and then the conductive film is patterned into a predetermined shape by photolithography to form a source electrode 17 and a drain electrode (first conductive layer) 18. The source electrode 17 and the drain electrode 18 are formed on the second interlayer film 16b and in the contact holes. Thereby, the source region 13b of the semiconductor layer is connected to the source electrode 17, and the drain region 13c of the semiconductor layer is connected to the drain electrode 18. Suitable materials for the source electrode 17 and the drain electrode 18 are low-resistant metals such as aluminum (Al), copper (Cu), and silver (Ag) and alloys and compounds mainly containing these low-resistant metals. In particular, aluminum (Al) is suitable in order to reduce the wiring resistance. The source electrode 17 and the drain electrode 18 may have a structure that the conductive films formed from these materials or other materials are laminated.

Next, an organic insulating layer (first insulating layer) 19 with a thickness of 1.0 to 3.0 µm is formed. The organic insulating layer 19 may be formed by applying an insulating film material by a method such as spin coating, and then firing the material, if necessary. Examples of a suitable material of the organic insulating layer 19 include resin materials such as polyimide, acryl, polyamide, polyimideamide, and BCB (benzocyclobutene); in particular, photo-sensitive acrylic resins are suitable. A photosensitive resin material enables to form a contact hole only by exposure and development after formation of the organic insulating layer 19. The organic insulating layer 19 may have a multilayer structure.

Next, a contact hole (first opening) is formed by photolithography through the organic insulating layer 19 on the drain electrode 18 such that at least a part of the drain electrode 18 is exposed.

Next, a transparent conductive film with a thickness of 50 to 300 nm is formed by sputtering, and then a resist is placed on a region to be a CS electrode layer and on the transparent conductive film on the drain electrode 18. The transparent conductive film is patterned into a predetermined shape by photolithography, and thereby a CS electrode layer (storage capacitor electrode; fourth conductive layer) 20a and a remaining-film layer (second conductive layer) 20b are formed. A suitable material of the transparent conductive film is a translucent metal oxide such as ITO or IZO. The ITO may be a non-crystalline (amorphous) one, may be a crystalline (poly) one, or may be one formed by crystallization of an amorphous one. Use of such a translucent conductive material for the CS electrode layer 20a enables to prevent reduction in the pixel aperture ratio. Further, formation of a resist on the transparent conductive film on the drain electrode 18 enables to prevent corrosion of the drain electrode 18 by an etchant.

Examples of a suitable etchant for metal oxides such as ITO and IZO include iron chloride etchants and hydrochloric etchants, and oxalic acid. In the case that aluminum (Al) is used as the material of the drain electrode, these etchants easily eat into the aluminum. Fig. 2 is a schematic view showing the etching step without a resist on ITO on the drain electrode 18. Conventionally, no resist is formed on this portion. Thus, the portion surrounded by the dot line of the drain electrode in Fig. 2 is damaged and the drain electrode 18 and the below-mentioned pixel electrode are not connected to each other. A titanium (Ti) layer may be placed as a barrier layer on the upper layer of the aluminum (Al) layer. If this is the case, however, even a slight defect in the formed film causes corrosion to proceed easily.

In contrast, Fig. 3 is a schematic view showing the etching step with a resist on ITO on the drain electrode. The present invention employs this method. In the manufacturing method of the present invention, the resist 23 used for formation of the CS electrode layer 20a is also placed on the drain electrode, and thus corrosion of the drain electrode 18 can be prevented. As a result, the reliability is improved and the yield is efficiently improved. The remaining-film layer 20b on the CS electrode layer 20a and the drain electrode 18 may have a multilayer structure. The resistance of a metal oxide such as ITO or IZO is higher than that of a metal such as Al (aluminum). Still, the area of the remaining-film layer 20b is small, and thus the layer 20b hardly affects the connection between the drain electrode 18 and the pixel electrode. As a result, the remaining-film layer 20b is formed so as to cover the surface of the exposed portion of the drain electrode 18.

Next, an inorganic insulating layer (second insulating film) 21 with a thickness of 100 to 400 nm is formed. The inorganic insulating layer 21 may be formed by plasma CVD or sputtering using a silicon-containing insulating material (e.g. SiO₂, SiN, SiNO). Specifically, for example, the inorganic insulating layer 21 is formed as a hydrogen-containing silicon nitride (SiN:H) layer by plasma CVD. The inorganic insulating layer 21 may have a multilayer structure.

Next, a contact hole (second opening) is formed by photolithography through the inorganic insulating layer 21 on the remaining-film layer 20b such that at least a part of the remaining-film layer 20b is exposed.

Finally, a transparent conductive film with a thickness of 30 to 200 nm is formed by sputtering, and the transparent conductive film is patterned into a predetermined shape by photolithography to form a pixel electrode 22. As a result, the pixel electrode 22 and the drain electrode 18 are connected through the opening 24 that penetrates the organic insulating layer 19 and the interlayer film 16. Examples of a suitable material of the pixel electrode 22 include translucent metal oxides such as ITO and IZO. The ITO may be a non-crystalline (amorphous) one, may be a crystalline (poly) one, or may be one formed by crystallization of an amorphous one. In Embodiment 1, the material of the pixel electrode 22 may be different from that of the CS electrode layer 20a and that of the remaining-film layer 20b. In other words, examples of the combination of the transparent conductive materials for the CS electrode layer 20a, the remaining-film layer 20b, and the pixel electrode 22 include (1) combination of poly ITO and amorphous ITO, (2) combination of ITO formed by baking and crystalizing an amorphous ITO and amorphous ITO, (3) combination of poly ITO and IZO, (4) combination of ITO formed by baking and crystalizing an amorphous ITO and IZO, and (5) combination of IZO and IZO. The shapes of the pixel electrode 22, the CS electrode layer 20a, and the remaining-film layer 20b may be observed using a scanning electron microscope (SEM), for example. The constituents of them may be analyzed by EDX (energy dispersive X-ray spectrometry).

The aforementioned steps enable to produce a highly reliable TFT substrate which has a low wiring resistance and a high aperture ratio, and in which connection is sufficiently secured.

Fig. 4 is an enlarged schematic cross-sectional view especially showing a region on the drain electrode of the TFT substrate produced by the manufacturing method of Embodiment 1. A resist is formed on the transparent conductive film on the drain electrode 18 in order to protect the drain electrode 18 in the manufacturing method of Embodiment 1. Thus, as shown in Fig. 4, a remaining-film layer 20b remains on the drain electrode 18. This is a major characteristic in the case of the manufacturing method of the present invention.

The TFT substrate produced as mentioned above can be suitably used as an active matrix substrate of a liquid crystal display device. Fig. 5 is a schematic perspective view of a liquid crystal display device to which the TFT substrate of Embodiment 1 is applied. As shown in Fig. 5, gate electrodes of TFTs (thin-film transistor) 34 are connected to gate lines 31 that extend in the row direction and supply scanning signals, and source electrodes thereof are connected to source lines 32 that extend in the column direction and supply image signals. When a gate voltage, which serves as a scanning signal supplied from a gate driver at a predetermined timing in a pulsed manner, is applied to each gate electrode, an image signal is supplied to the corresponding pixel electrode 22 through the corresponding source electrode, semiconductor layer, and drain electrode at that timing. Multiple pixel electrodes 22 are disposed in a matrix manner, and each region overlapping the pixel electrode serves as one pixel. The CS electrode layer 20a may be disposed so as to be parallel with the gate line 31 and to cross the pixel electrode 22, for example.

The liquid crystal display device comprises a pair of substrates consisting of a TFT substrate (electronic substrate) 51 and an opposite substrate 52, and a liquid crystal layer 53 sandwiched between the substrates 51 and 52. The opposite substrate 52 has a glass substrate 41 or the like as a main substrate, and has an opposite electrode 42 that forms an electric field in the liquid crystal layer 53 together with the pixel electrode 22 on the glass substrate 41. Examples of a suitable material of the opposite electrode 42 include translucent metal oxides such as ITO and IZO. As a result, the alignment state of the liquid crystal molecules can be changed by applying a voltage to the inside of the liquid crystal layer 53, and the polarization state of light passing through the liquid crystal layer 53 can be changed, thereby controlling image display.

The present application claims priority to Patent Application No. 2010-095100 filed in Japan on April 16, 2010 under the Paris Convention and provisions of national law in a designated State, the entire contents of which are hereby incorporated by reference.

### REFERENCE SIGNS LIST

- 11:: glass substrate
- 12:: base coat layer
- 13:: semiconductor layer
- 13a:: channel region
- 13b:: source region
- 13c:: drain region
- 13d:: LDD region
- 14:: gate insulating film
- 15:: gate electrode
- 16:: interlayer film
- 17:: source electrode
- 18:: drain electrode (first conductive layer)
- 19:: organic insulating layer (first insulating layer)
- 20a:: CS electrode layer (fourth conductive layer)
- 20b:: remaining-film layer (second conductive layer)
- 21:: inorganic insulating layer (second insulating layer)
- 22:: pixel electrode (third conductive layer)
- 23:: resist
- 24:: opening
- 31:: gate line
- 32:: source line
- 34:: TFT (thin-film transistor)
- 41:: glass substrate
- 42:: opposite electrode
- 51:: TFT substrate (active matrix substrate)
- 52:: opposite substrate
- 53:: liquid crystal layer

## Claims

1. A method for manufacturing an electronic substrate which comprises a main substrate, a first conductive layer, a first insulating layer, a second conductive layer, a second insulating layer, and a third conductive layer, laminated in the order set forth, and in which the first conductive layer, the second conductive layer, and the third conductive layer are connected together at an opening that penetrates the first insulating layer and the second insulating layer,
the method comprising the steps of:
forming the first conductive layer;
forming the first insulating layer with an opening which exposes at least a part of the first conductive layer;
applying a conductive film to an exposed portion of the first conductive layer and the first insulating layer;
forming the second conductive layer that covers a surface of the exposed portion of the first conductive layer by applying a resist to a part of the conductive film and etching the conductive film that does not overlap the resist;
forming the second insulating layer with an opening which exposes at least a part of the second conductive layer; and
forming the third conductive layer on an exposed portion of the second conductive layer and the second insulating layer.

2. The method for manufacturing an electronic substrate according to claim 1,
wherein the step of forming the second conductive layer is also a step of forming a fourth conductive layer that is electrically separated from the second conductive layer by applying a resist to another part of the conductive film and etching the conductive film that does not overlap the resist.

3. The method for manufacturing an electronic substrate according to claim 2,
wherein the third conductive layer and the fourth conductive layer form a capacitance at the second insulating film.

4. A method for manufacturing a liquid crystal display device, the method comprising:
manufacturing a liquid crystal display device that comprises a pair of substrates and a liquid crystal layer sandwiched between the substrates, one of the substrates being manufactured by the manufacturing method according to claim 1,
the first insulating layer being an organic insulating layer,
the second insulating layer being an inorganic insulating layer, and
the second conductive layer and the third conductive layer each having translucency.

5. A method for manufacturing a liquid crystal display device, the method comprising:
manufacturing a liquid crystal display device that comprises a pair of substrates and a liquid crystal layer sandwiched between the substrates, one of the substrates being manufactured by the manufacturing method according to claim 2 or 3,
the first insulating layer being organic insulating layer,
the second insulating layer being an inorganic insulating layer, and
the second conductive layer, the third conductive layer, and the fourth conductive layer each having translucency.

6. An electronic substrate, comprising, laminated in the order set forth:
a main substrate;
a first conductive layer;
a first insulating film;
a second conductive layer;
a second insulating film; and
a third conductive layer,
the first insulating layer being provided with a first opening which exposes at least a part of the first conductive layer,
the second insulating layer being provided with a second opening which exposes at least a part of the second conductive layer,
the first conductive layer, the second conductive layer, and the third conductive layer being connected together at the first opening and the second opening,
the second conductive layer covering a surface of an exposed portion of the first conductive layer, and
the third conductive layer covering a surface of an exposed portion of the second conductive layer.

7. The electronic substrate according to claim 6, further comprising:
a fourth conductive layer which is on the same layer as the second conductive layer and which is electrically separated from the second conductive layer.

8. The electronic substrate according to claim 7,
wherein the third conductive layer and the fourth conductive layer form a capacitance at the second insulating film.

9. A liquid crystal display device, comprising:
a pair of substrates consisting of the electronic substrate according to claim 6 and an opposite substrate; and
a liquid crystal layer sandwiched between the substrates,
the first insulating layer being an organic insulating layer,
the second insulating layer being an inorganic insulating layer, and
the second conductive layer and the third conductive layer each having translucency.

10. A liquid crystal display device, comprising:
a pair of substrates consisting of the electronic substrate according to claim 7 or 8 and an opposite substrate; and
a liquid crystal layer sandwiched between the substrates,
the first insulating layer being an organic insulating layer,
the second insulating layer being an inorganic insulating layer, and
the second conductive layer, the third conductive layer, and the fourth conductive layer each having translucency.
